# EUROPEAN PATENT APPLICATION

(11) **EP 3 859 526 A1**
(43) Date of publication of application: **04.08.2021**
(21) Application number: 20305080.2
(22) Date of filing: 30.01.2020
(51) Int. Cl.: G06F 11/07, G06F 11/22

(54) **ERROR INFORMATION STORAGE**

(71) Applicant: Hewlett-Packard Development Company, L.P., Spring TX 77389 (US)
(72) Inventor: Lagnado, Isaac, Spring, TX 77389 (US); Secci, Sandro, 38053 Grenoble (FR); Chuang, Mars, 11568 Taipei City (TW); Petit, Steven, Spring, TX 77389 (US); Zotto, Rafael, 90619-900 Porto Alegre (BR); DeRoos, Stephen, Vancouver, WA 98683-5514 (US); Stancil, Charles, Spring, TX 77389 (US)
(74) Representative: Bryers LLP

(57) **Abstract**

An example computing device includes a power supply. The computing device also includes a storage device to receive power from the power supply during an error collection operation. The storage device is also to receive power via radio waves from a client device during a diagnostic operation. The computing device further includes a controller to receive error information associated with a component of the computing device. The controller is also to store the error information in the storage device during the error collection operation.

## Description

### BACKGROUND

A computing device, such as a laptop computer, may malfunction due to an error in a component of the computing device. The component may be a hardware component, such a circuit. The component may also be instructions being executed by the computing device. In some situations, the malfunction may cause the computing device to lose some functionality.

### BRIEF DESCRIPTION OF THE DRAWINGS

Some examples of the present application are described with respect to the following figures:
FIG. 1 illustrates a computing device to provide error information associated with the computing device via a storage device, according to an example;
FIG. 2 illustrates a system to diagnose an error in a computing device via error information stored in a storage device of the computing device, according to an example;
FIG. 3 illustrates an operation flow at a computing device and a client device to enable the client device to provide repair information, according to an example;
FIG. 4 illustrates an operation flow at a computing device, a client device, and a diagnostic server to enable the client device to provide repair information, according to an example;
FIG. 5 illustrates an operation flow at a computing device, a client device, and a diagnostic server to enable the client device to provide repair information to the computing device, according to an example;
FIG. 6 illustrates a location of a storage device within a computing device to store error information, according to an example; and
FIG. 7 illustrates a computing device to store error information in a storage device, according to an example.

### DETAILED DESCRIPTION

In some situations, a computing device may lose output functionality due to an error in a component. For example, a driver for a graphics card of a computing device may become corrupted during a boot up process. The computing device may not be able to output any graphical information using the graphics card, thus making troubleshooting the error challenging.

Examples described herein provide an approach to provide error information of a computing device using a storage device of the computing device. In an example, a computing device may include a power supply. The computing device may also include a storage device to receive power from the power supply during an error collection operation. The storage device may also receive power via radio waves from a client device during a diagnostic operation. The computing device may further include a controller to receive error information associated with the computing device and store the error information in the storage device during the error collection operation.

In another example, a computing device may include a power supply, an input device, a controller, and a storage device disposed below the input device. The storage device may receive power from the power supply. The storage device may also receive power via radio waves when the power supply is unavailable. The controller may, in response to detecting error information associated with the computing device, store the error information in the storage device.

In another example, a computing device may include a power supply, a storage device having an antenna, and a controller. The storage device may receive power from the power supply via a wired connection during an error collection operation. The storage device may also receive power wirelessly from an external device during a diagnostic operation. The controller may receive status information of a component of the computing device and store the status information in the storage device during the error collection operation. Thus, examples described herein may enable a computing device to provide error information to another device for diagnostic even if the computing device is not operational.

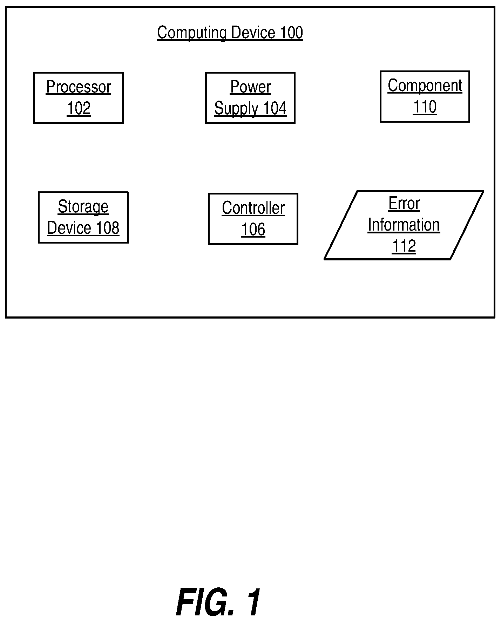

FIG. 1 illustrates a computing device 100 to provide error information associated with computing device 100 via a storage device, according to an example. Computing device 100 may be, a web-based server, a local area network server, a cloud-based server, a laptop computer, a desktop computer, an all-in-one system, a tablet computing device, a mobile phone, an electronic book reader, or any computing device suitable to store error information in a storage device.

Computing device 100 may include a processor 102, a power supply 104, a controller 106, a storage device 108, and a component 110. Processor 102 may control operations of computing device 100. Processor 102 may be a central processing unit (CPU), a semiconductor-based microprocessor, and/or other hardware devices suitable for retrieval and execution of instructions stored in a computer-readable storage medium.

Power supply 104 may provide power to components of computing device 100, such as processor 102. In some examples, power supply 104 may be implemented as a battery. In some examples, power supply 104 may be implemented as circuitry that converts alternating current to direct current. The direct current may be used to power the components of computing device 100.

Component 110 may be an entity that performs a particular function in computing device 100. Component 110 may be a hardware device, a set of processor executable instructions, or a combination thereof. In some examples, component 110 may be implemented as a basic input/output system (BIOS) of computing device 100. In some examples, component 110 may be implemented as an operating system (OS) of computing device 100. In some examples, component 110 may be implemented as a memory (e.g., volatile memory) of computing device 100.

Controller 106 may be a semiconductor-based microprocessor. Controller 106 may be implemented as an embedded controller of computing device 100. Controller 106 may control operations of storage device 108. As described in more detail below, controller 106 may be connected to component(s) of computing device 100, such as processor 102, component 110, etc. to monitor and/or receive error information of component(s) of computing device 100.

Storage device 108 may be a device where data/information is stored for retrieval. Storage device 108 may be implemented using non-volatile memory, such as solid-state memory. Storage device 108 may receive power from power supply 104 via a wired connection. In some examples, storage device 108 may be directed connected to power supply 104 to receive power. In some examples, storage device 108 may be indirectly connected to power supply 104 via controller 106 to receive power. That is, power supply 104 may provide power to controller 106. Controller 106 may in turn pass on or provide power to storage device 108. As described in more detail below, storage device 108 may include circuitry and components to receive power wirelessly via radio waves from another device that is different from computing device 100. Thus, storage device 108 may be able to provide data/information stored for retrieval even when computing device 100 is not operational and/or power supply 104 is unavailable.

During operation, controller 106 may perform an error collection operation. During the error collection operation, controller 106 may receive error information 112 associated with a component of computing device 100, such component 110. Controller 106 may store error information 112 in storage device 108. Component 110 may detect an error during operation and generate error information 112. Component 110 may transmit error information 112 to controller 106. In some examples, controller 106 may be connected to component 110 and may monitor the operation of component 110. Thus, controller 106 may detect an error during operation of component 110 and generate error information 112. Controller 106 may then store error information 112 in storage device 108. During the error collection operation, storage device 108 may receive power from power supply 104.

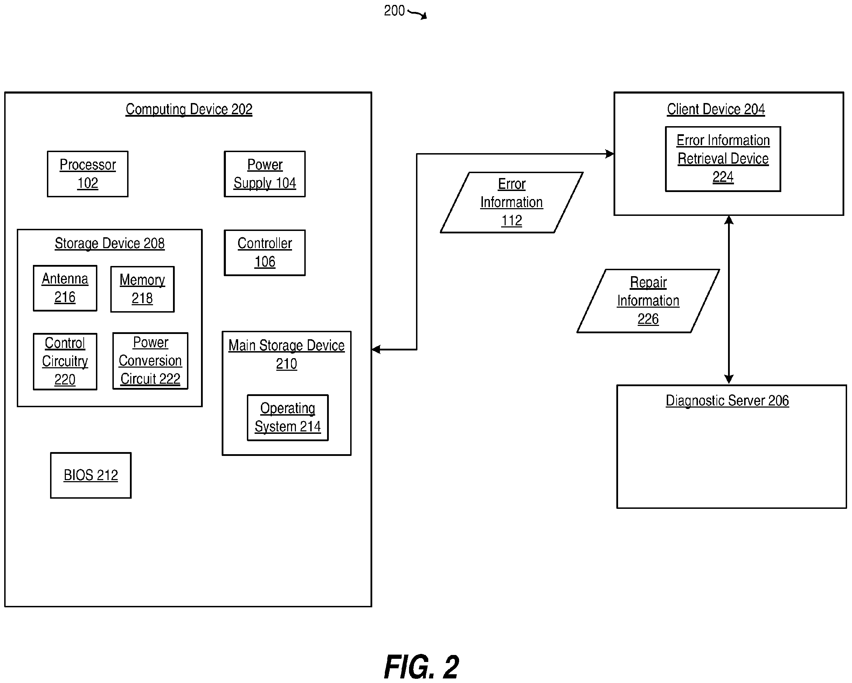

As described in more detail in FIGs. 2-5, the error may cause computing device 100 to become non-operational, such as not being able to turn on, not being able to boot into the operation system, not being able to output information for display, or power supply 104 malfunctioning (thus not being able to provide power to any component of computing device 100), etc. Another device may provide power to storage device 108 to retrieve error information 112. Error information 112 may be used to repair the error.

FIG. 2 illustrates a system 200 to diagnose an error in a computing device 202 via error information stored in a storage device of computing device 202, according to an example. System 200 may include computing device 202, a client device 204, and a diagnostic server 206.

Computing device 202 may implement computing device 100 of FIG. 1. Computing device 202 may include processor 102, power supply 104, controller 106, a storage device 208, a main storage device 210, a BIOS 212, and an operating system 214.

Storage device 208 may implement storage device 108 of FIG. 1. Storage device 208 may include an antenna 216, a memory 218, control circuitry 220, and a power conversion circuit 222. Antenna 216 may receive radio waves from another device, such as client device 204. Control circuitry 220 may control operations of memory 218. Power conversion circuit 222 may also convert the radio waves to power (i.e., electricity) and the power may be used by control circuitry 220 and memory 218. Memory 218 may store data/information. In some examples, storage device 208 may be implemented as a near-field communication (NFC) tag. As used herein, a tag is a passive device that provides data/information in response to a wireless signal transmitted by a reader, which is the device that initiates the communication. In some examples, storage device 208 may be implemented using other wireless technology, such as Bluetooth, Bluetooth Low Energy, etc.

Main storage device 210 may be any non-volatile storage device. For example, main storage device 210 may be implemented using a solid-state storage device, such as flash memory. Main storage device 210 may also be implemented using a hard disk drive. Operating system 214 may be stored in main storage device 210.

BIOS 212 may be hardware or hardware and instructions to initialize, control, or operate computing device 202 prior to execution of operating system 214 of computing device 202. Instructions included within BIOS 212 may be software, firmware, microcode, or other programming that defines or controls functionality or operation of BIOS 212. In one example, BIOS 212 may be implemented using instructions, such as platform firmware of a computing device, executable by processor 102. BIOS 212 may operate or execute prior to the execution of operating system 214. BIOS 212 may initialize, control, or operate components such as hardware components of computing device 202 and may load or boot operating system 214.

BIOS 212 may provide or establish an interface between hardware devices or platform firmware of computing device 202 and operating system 214, via which operating system 214 may control or operate hardware devices or platform firmware of the computing device. In some examples, BIOS 212 may implement the Unified Extensible Firmware Interface (UEFI) specification or another specification or standard for initializing, controlling, or operating computing device 202.

During operation, controller 106 may store error information 112 in memory 218 of storage device 208. Error information 112 may be associated with a component of computing device 202. In some examples, error information 112 may be associated with BIOS 212. As an example, error information 112 may correspond to an error that BIOS 212 detected during a power-on self-test (POST). In some examples, error information 112 may be associated with operating system 214. As an example, error information 112 may correspond to an error operating system 214 detected during the execution of operating system 214, such as failure to load a particular driver. In some examples, error information 112 may be associated with main storage device 210. As an example, error information 112 may correspond to a read and/or write error detected by main storage device 210.

In some examples, error information 112 may include status information of a component of computing device 202. For example, error information 112 may correspond to an output from BIOS 212, such as the progress of the POST, initialization status of each hardware component of computing device 202 during boot up, etc. As another example, error information 112 may correspond to temperature information of processor 102. As another example, error information 112 may correspond to read and/or write count of main storage device 210. As another example, error information 12 may correspond to voltage and/or current output from power supply 104. Error information 112 may also correspond to temperature of power supply 104.

When computing device 202 experiences malfunction (e.g., not being able to boot into operating system 214, not being able to power up, etc.), client device 204 may perform a diagnostic operation on computing device 202.

Client device 204 may be a laptop computer, a tablet computing device, a mobile phone, an electronic book reader, a smart watch, a wearable device, or any computing device suitable to retrieve information from another device using radio waves. Client device 204 may include an error information retrieval device 224. Error information retrieval device 224 may be implemented as a near-field communication reader. During the diagnostic operation, client device 204 may be moved within communication range of computing device 202. Error information retrieval device 224 may generate a radio frequency field. Storage device 208 may receive the radio waves of the radio frequency field. Power conversion circuit 222 may convert the radio waves to power (e.g., via a rectifier circuit). The power may then be provided to control circuitry 220 and memory 218. When control circuitry 220 and memory 218 are turned on, client device 204 may extract error information 112 from memory 218 via error information retrieval device 224.

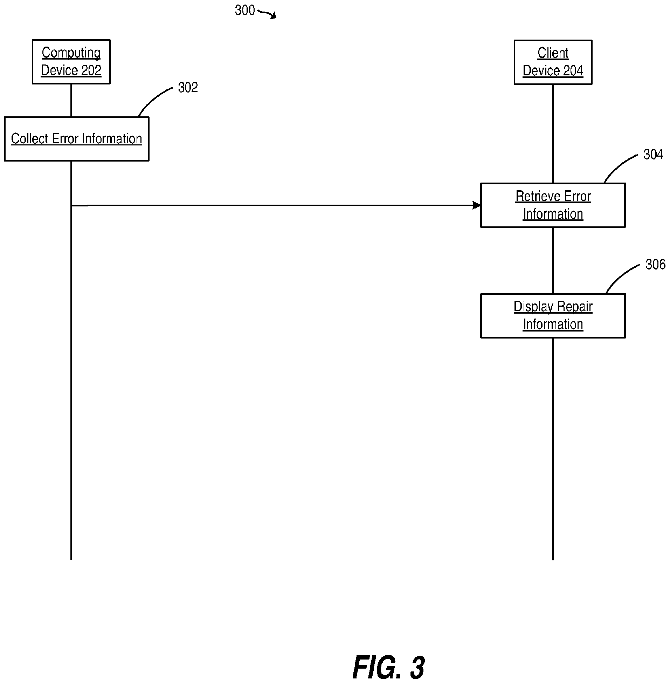

In some examples, client device 204 may generate repair information 226 based on error information 112. In some examples, client device 204 may transmit error information 112 to diagnostic server 206. Based on error information 112, diagnostic server 206 may generate repair information 226 and may transmit repair information 226 to client device 204. Repair information 226 may be used to repair computing device 202 during a repair operation. Generation of repair information 226 is described in more detail in FIGs. 3-5.

Turning to FIG. 3, FIG. 3 illustrates an operation flow 300 at computing device 202 and client device 204 to enable client device 204 to provide repair information, according to an example. At 302, computing device 202 may collect error information 112. At 304, client device 204 may retrieve error information 112. For example, client device 204 may retrieve error information 112 via the NFC connection. In response to retrieving error information 112, client device 204 may generate repair information 226. For example, client device 204 may use a look up table to generate repair information 226 by comparing the content of error information to solutions in the look up table. In response to generating repair information 226, client device 204 may provide repair information 226 by displaying repair information 226 in a display device of client device 204. In some examples, repair information 226 may correspond to instructions/steps that a user of client device 204 may follow to repair computing device 202.

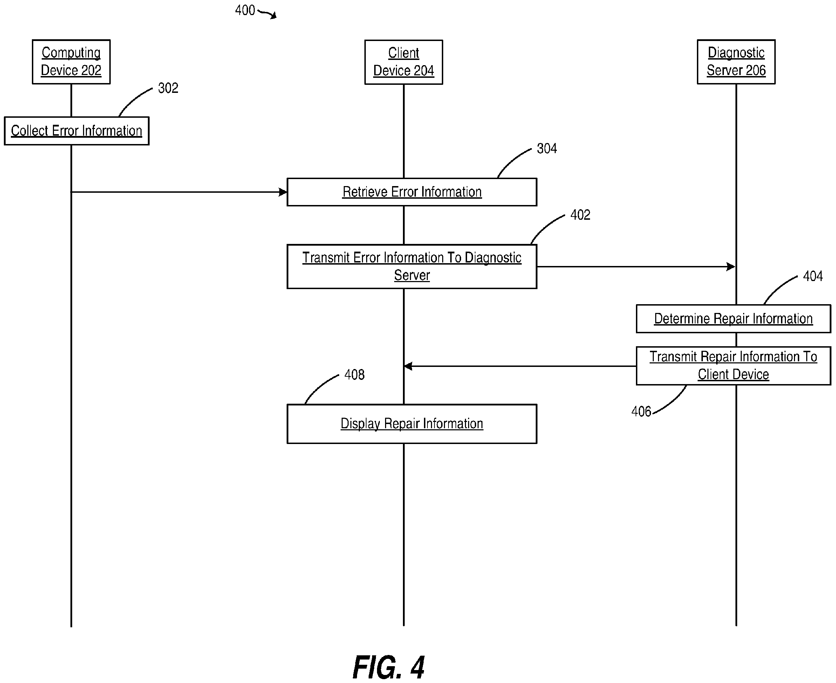

FIG. 4 illustrates an operation flow 400 at computing device 202, client device 204, and diagnostic server 206 to enable client device 204 to provide repair information, according to an example. At 402, in response to retrieving error information 112 from computing device 202, client device 204 may transmit error information 112 to diagnostic server 206. At 404, diagnostic server 206 may determine and generate repair information 226 based on error information 112.

At 406, when diagnostic server 206 has generated repair information 226, diagnostic server 206 may transmit repair information 226 to client device 204. At 408, client device 204 may display repair information 226.

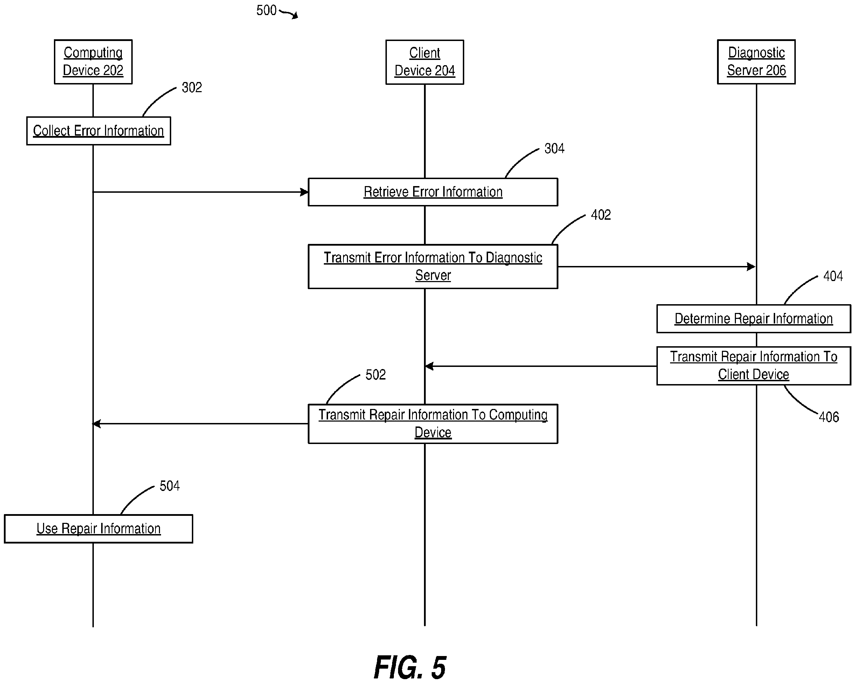

FIG. 5 illustrates an operation flow 500 at computing device 202, client device 204, and diagnostic server 206 to enable client device 204 to provide repair information to the computing device, according to an example. At 502, in response to receiving repair information 226 from diagnostic server 206, client device 204 may transmit repair information 226 to computing device 202. At 504, computing device 202 may use repair information 226 to repair an error in computing device 202.

In some examples, repair information 226 may include instructions executable by computing device 202. As an example, repair information 226 may be a BIOS upgrade file. At the next boot up, controller 106 may notify BIOS 212 that an upgrade file is available. Controller 106 may transmit the BIOS upgrade file from storage device 208 to BIOS 212. BIOS 212 perform an upgrade using the BIOS upgrade file. As another example, repair information 226 may be a graphics card driver. At the next boot up, controller 106 may notify operating system 214 that a new driver is available for a graphics card. Controller 106 may transmit the new driver from storage device 208 to main storage device 210. Operating system 214 may replace an existing driver with the new driver.

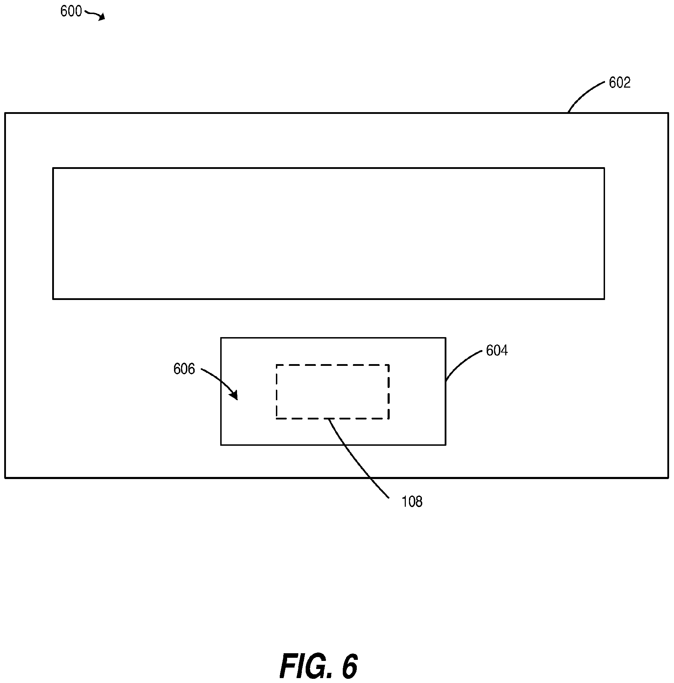

FIG. 6 illustrates a location of a storage device within a computing device 600 to store error information, according to an example. Computing device 600 may implement computing device 202 of FIG. 2. Computing device 600 may be a laptop computer.

Computing device 600 may include a housing 602. Housing 602 may be made from metal, such as aluminum. Housing 602 may include an opening 604. An input device 606 may be disposed in opening 604. Input device 606 may be a point device such as a touchpad or a clickpad. Storage device 108 may be disposed below input device 606, thus storage device 108 is aligned with opening 604. By aligning storage device 108 with opening 604, radio waves used in wireless communication may propagate more efficiently.

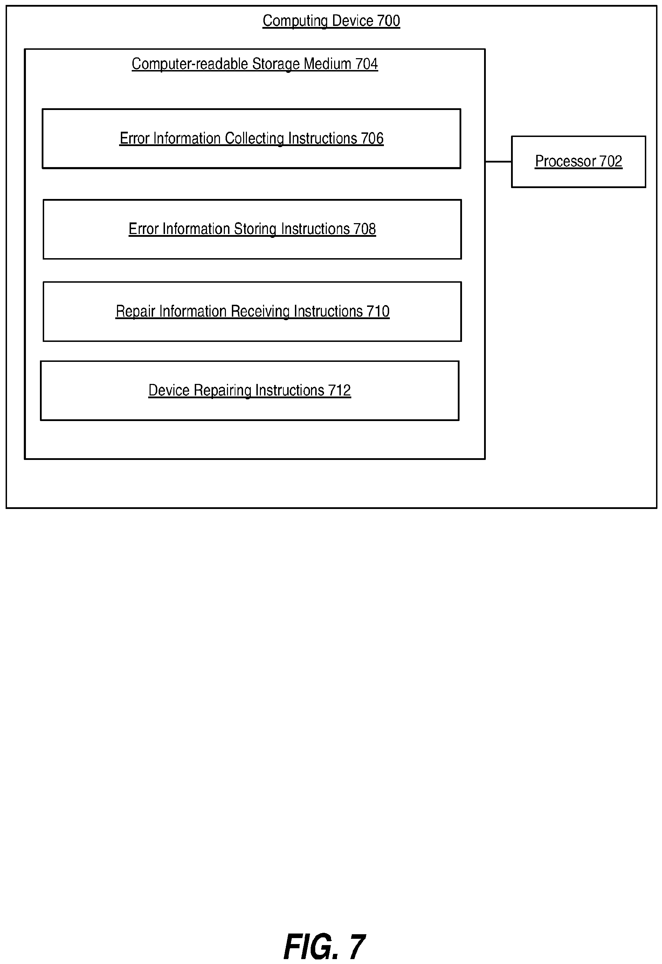

FIG. 7 illustrates a computing device 700 to store error information in a storage device, according to an example. Computing device 700 may implement computing device 202 of FIG. 2. Computing device 700 may include a processor 702 and a computer-readable storage medium 704.

Processor 702 may be a central processing unit (CPU), a semiconductor-based microprocessor, and/or other hardware devices suitable for retrieval and execution of instructions stored in computer-readable storage medium 704. Processor 702 may fetch, decode, and execute instructions 706, 708, 710, and 712 to control operations of computing device 700. As an alternative or in addition to retrieving and executing instructions, processor 702 may include at least one electronic circuit that includes electronic components for performing the functionality of instructions 706, 708, 710, 712, or a combination thereof.

Computer-readable storage medium 704 may be any electronic, magnetic, optical, or other physical storage device that contains or stores executable instructions. Thus, computer-readable storage medium 704 may be, for example, Random Access Memory (RAM), an Electrically Erasable Programmable Read-Only Memory (EEPROM), a storage device, an optical disc, etc. In some examples, storage medium 604 may be a non-transitory storage medium, where the term "non-transitory" does not encompass transitory propagating signals. Computer-readable storage medium 704 may be encoded with a series of processor executable instructions 706, 708, 710, and 712.

Error information collecting instructions 706 may collect error information from a component of a computing device. For example, referring to FIG. 2, controller 106 may collect error information 112 from BIOS 212. Error information storing instructions 708 may store error information 112 to a storage device. For example, referring to FIG. 2, controller 106 may store error information 112 in storage device 108.

Repair information receiving instructions 710 may receive repair information from another device. For example, referring to FIG. 2, computing device 202 may receive repair information 226 from client device 204. Device repairing instructions 712 may use repair information to repair a computing device. For example, referring to FIG. 2, computing device 202 may use repair information 226 to repair computing device 202.

The use of "comprising", "including" or "having" are synonymous and variations thereof herein are meant to be inclusive or open-ended and do not exclude additional unrecited elements or method steps.

## Claims

1. A computing device comprising:
a power supply;
a storage device to:
receive power from the power supply during an error collection operation; and
receive power via radio waves from a client device during a diagnostic operation; and
a controller to:
receive error information associated with the computing device; and
store the error information in the storage device during the error collection operation.

2. The computing device of claim 1, wherein the storage device is further to receive repair information that is generated based on the error information from the client device.

3. The computing device of claim 2, further comprising a main storage device, wherein the controller is further to transmit the repair information to the main storage device.

4. The computing device of claim 2, further comprising a processor, wherein the processor is to use the repair information in a repair operation.

5. A computing device comprising:
a power supply;
an input device;
a storage device disposed below the input device, wherein the storage device is to:
receive power from the power supply; and
receive power via radio waves when the power supply is unavailable; and
a controller to:
in response to detecting error information associated with the computing device, store the error information in the storage device.

6. The computing device of claim 5, wherein the storage device is a near-field communication (NFC) tag.

7. The computing device of claim 5, wherein the error information is associated with a basic input/output system (BIOS) of the computing device, an operating system of the computing device, a hardware component of the computing device, a set of instructions executable by the computing device, or a combination thereof.

8. The computing device of claim 5, wherein the input device is a pointing device.

9. The computing device of claim 5, wherein the storage device includes an antenna, wherein the storage device is to receive the power via the antenna.

10. A computing device comprising:
a power supply;
a storage device having an antenna, wherein the storage device is to:
receive power from the power supply via a wired connection during an error collection operation; and
receive power wirelessly from an external device during a diagnostic operation; and
a controller to:
receive status information of a component of the computing device; and
store the status information in the storage device during the error collection operation.

11. The computing device of claim 10, wherein the storage device is a near-field communication (NFC) tag.

12. The computing device of claim 10, wherein the status information is received from a basic input/output system (BIOS) of the computing device.

13. The computing device of claim 10, further comprising a metal housing, wherein the metal housing has an opening, and wherein the storage device is aligned with the opening.

14. The computing device of claim 10, wherein the status information corresponds to an output from a power-on self-test (POST).

15. The computing device of claim 10, wherein the storage device is to receive repair information wirelessly from the external device.
